# EUROPÄISCHE PATENTSCHRIFT

(11) **EP 3 227 996 B1**
(45) Veröffentlichungstag und Bekanntmachung des Hinweises auf die Patenterteilung: **27.01.2021**
(21) Anmeldenummer: 15801463.9
(22) Anmeldetag: 30.11.2015
(51) Int. Cl.: H01R 4/28, H02S 40/34, H02S 20/00, F24S 20/70

(54) **ANSCHLUSSEINRICHTUNG ZUR ELEKTRISCHEN KONTAKTIERUNG VON FLÄCHIG AUSGEBILDETEN ELEKTRISCH LEITENDEN ELEMENTEN UND DEREN VERWENDUNG**
CONNECTING DEVICE FOR ELECTRICALLY CONTACTING ELECTRICALLY CONDUCTIVE ELEMENTS OF PLANAR DESIGN, AND USE THEREOF
DISPOSITIF DE CONNEXION POUR LA MISE EN CONTACT ÉLECTRIQUE D'ÉLÉMENTS ÉLECTROCONDUCTEURS PLATS ET SON UTILISATION

(30) Priorität: 04.12.2014 DE 102014224909
(43) Veröffentlichungstag der Anmeldung: 11.10.2017
(73) Patentinhaber: Benecke-Kaliko AG, 30419 Hannover (DE); Continental Engineering Services & Products GmbH, 85057 Ingolstadt (DE)
(72) Erfinder: HAARBURGER, Tobias, 30167 Hannover (DE); STORRE, Jens, 37176 Nörten-Hardenberg (DE); STÖLTING, Andreas, 30989 Gehrden (DE); NIEDERMAYER, Gregor, 85276 Pfaffenhofen (DE); BULLEMER, Wolfgang, 86316 Friedberg (DE)
(74) Vertreter: Kilsch, Armin Ralph
(86) Internationale Anmeldenummer: PCT/EP2015/078043
(87) Internationale Veröffentlichungsnummer: WO 2016/087361

(56) Entgegenhaltungen:
- EP-A1- 2 200 124
- EP-A1- 2 581 946
- WO-A1-2011/154188
- DE-A1- 19 857 172
- DE-A1-102009 030 141
- DE-A1-102011 056 284
- US-A1- 2010 139 760

## Beschreibung

### Neufassung der Beschreibung

Die Erfindung betrifft eine Anschlusseinrichtung zur elektrischen Kontaktierung von elektrisch leitenden Anschlussfahnen oder Anschlusskontakten flächig ausgebildeter elektrisch leitender Elemente, insbesondere zur Kontaktierung von flächigen Photovoltaik-Elementen, welche eine aus nichtleitendem Material bestehende flache Trägerplatte aufweist, vorzugsweise ausgebildet als rechteckiger, flacher Bauteilrahmen, sowie mindestens ein mit der Trägerplatte verbundenes Leiterblech, wobei das Leiterblech Anschlüsse zur Kontaktierung mindestens eines weiterführenden elektrischen Leiters oder Kabels aufweist, vorzugsweise Kabelschuhe oder Klemmhülsen, und wobei am Leiterblech mindestens ein Anschlussbereich zur Kontaktierung mindestens einer der Anschlussfahnen oder Anschlusskontakte vorgesehen ist.

Die Anschlusseinrichtung weist außerdem ein Kontaktbauteil aus nichtleitendem Material aufweist, welches die Anschlussfahnen oder Anschlusskontakte elektrisch und mechanisch mit dem Leiterblech verbindet, wobei die Trägerplatte aus Kunststoff ausgebildet ist.

Flächige elektrisch leitende Elemente sind in vielfacher Ausbildung im Stand der Technik bekannt, beispielsweise als photovoltaische Elemente oder als Folienheizungen etc. Photovoltaische Elemente, wie etwa Solarelemente oder Solar-Panels, müssen, um bei der Stromgewinnung eine entsprechende Ausbeute zu erreichen, üblicherweise zu mehreren Elementen zu einer Gesamtanlage zusammengeschlossen werden. Hierbei sind die elektrischen Anschlüsse dann besonders problematisch, wenn die relativ dünnen photovoltaischen Elemente Bewegungen ausführen und damit Kräfte auf die Anschlüsse bzw. die Anschlusskonstruktion wirken können, welche die Kontaktierung schädigen.

Wenn solche photovoltaischen Element auf Trägermaterialien, z.B. Trägerfolien aus Kunststoff verlegt werden sollen, die zum Einsatz durch Auslegen auf einen Untergrund vorgesehen sind, müssen die einzelnen photovoltaischen Elemente auch auf dem Trägermaterial zusammengeschaltet werden. Mit der bisher hierfür genutzten Technik der Steckverbindungen, die eine erhebliche Größe aufweisen, lassen sich jedoch längere Stücke nur mit viel Handarbeit bei der Kontaktierung herstellen. Die Kontaktierung muss dem Standard EN 50521:2008 + A1:2012 für Steckverbinder entsprechen. Hier sind Anschlussdosen genormt, die mehrere Zentimeter hoch sind. Ausgehend von diesem Stand der Technik müssten alle Elemente einzeln auf dem Untergrund aufgebracht, aufgelegt und mit den geplanten Anschlussdosen zusammengeschaltet werden. Dadurch wird die Verlegung solcher photovoltaischen Elemente außerordentlich zeitaufwändig und teuer.

Wünschenswert wäre es, wenn die Verlegung "von der Rolle" erfolgen und vorgefertigte und miteinander oder mit dem Anschluss zum Wechselrichter bereits elektrisch verbundene/photovoltaische Elemente auf bahnförmigen Trägermaterial direkt ausgelegt werden könnten. Allein die Abmessungen der bisherigen Steckverbinder lassen jedoch bisher das Aufwickeln des Folienverbundes, der wünschenswerter Weise eine Länge von 40 m bis 200 m haben sollte, nicht zu. Demzufolge konnte sich die Herstellung von "Endlosmaterial" auf Rollen bisher nicht durchsetzen, da in diesem Fall die Verbindungen bzw. das Zusammenschalten der photovoltaischen Elemente mit herkömmlichen Steckverbindungen nachträglich und nach dem Ausrollen erfolgen muss, was einen erheblichen Arbeitsaufwand zur Folge hätte.

Die DE 10 2011 056 284 A1 offenbart eine schwimmende Folie, die in Teilbereichen mit einem Solarmodul bedeckt ist und die als Schutz- und Abdeckfolie auf der Oberfläche eines Flüssigkeitsreservoirs angeordnet ist. Eine besondere Art der elektrischen Verbindung der Solarmodule ist nicht offenbart.

Die US 2010/0139760 A1 offenbart eine Einrichtung zur elektrischen Verbindung von Solarmodulen, bei der die Anschlussfahnen durch Öffnungen im Boden der Einrichtung gesteckt werden und beim Schließen der Einrichtung mit Kontakten verbunden bzw. geklemmt werden können. Die Einrichtung ist kastenförmig ausgebildet und nimmt daher auch für die Montage relativ viel Raum ein. Diese Einrichtung legt die Kombination der Merkmale offen, die der Oberbegriff des Anspruchs 1 bilden.

Die EP 2 581 946 A1 offenbart ebenfalls eine Einrichtung für den elektrischen Anschluss von Solarmodulen, welche unterschiedliche Bereiche und Kammern für die elektrische Verbindung einerseits und die Klebeverbindung zum Solarmodul andererseits aufweist. Die elektrische Verbindung ist dabei als einfache Steckmuffe ausgebildet, so dass die gesamte Verbindung ebenfalls viel Bauraum benötigt.

Für die Erfindung bestand also die Aufgabe, eine Kontaktierung, d.h. eine Anschlusseinrichtung zur Kontaktierung von flächig ausgebildeten elektrisch leitenden Elementen bereitzustellen, beispielsweise für flächigen Photovoltaik-Elemente, die es auf einfache und sichere Weise erlaubt, die flächigen Elemente in großer Länge auf einem Trägermaterial herzustellen und gleich bei der Herstellung zu kontaktieren, d.h. miteinander zu verbinden, so dass flächig ausgebildete elektrisch leitende Elemente als Rollenware auf Trägermaterial bereitgestellt und in besonders einfacher Weise auf einem vorgefertigten Untergrund oder Trägerkörper aufgelegt werden können.

Gelöst wird diese Aufgabe durch die Merkmale des Hauptanspruchs. Weitere vorteilhafte Ausbildungen sind in den Unteransprüchen offenbart.

Dabei sind die Leiterbleche und die Anschlüsse zur Kontaktierung weiterführender elektrischer Leiter oder Kabel mit der Trägerplatte durch Verformung von Teilen der Trägerplatte verbunden sind, wobei die Verformung durch Heißverstemmen erfolgt und wobei die Anschlusseinrichtung insgesamt in einem elektrisch isolierenden Kunststoffmaterial eingekapselt ist.

Die Anschlusseinrichtung weist ein Kontaktbauteil aus nichtleitendem Material auf, welches die Anschlussfahnen oder Anschlusskontakte elektrisch und mechanisch mit dem Leiterblech verbindet und ggf. klemmt oder verrastet. Die Anschlusseinrichtung insgesamt ist in einem elektrisch isolierenden Kunststoffmaterial eingekapselt und benötigt somit kein zusätzliches Gehäuse zum Schutz der Bauteile bzw. zur Isolierung der Bauteile voneinander.

Die erfindungsgemäße Anschlusseinrichtung erlaubt die Herstellung eines quasi endlos langen Folienverbundes auf einem Trägermaterial bzw. einer Trägerfolie, die in definierten Abständen flexible Fotovoltaik-Dünnschichtmodule aufweist, deren Kontaktierung über die Anschlusseinheiten im Zuge der Fertigung ausgeführt wird. Die u.a. durch die Verwendung einer Trägerplatte überaus flach und ohne zusätzliche Gehäuse ausgebildeten Anschlusseinrichtungen tragen somit nicht merkbar auf der Oberfläche der Trägerfolie auf und erlauben, dass das Material, d.h. die Trägerfolie mitsamt den aufgebrachten Photovoltaik-Dünnschichtmodulen und Anschlusseinrichtungen gerollt werden und als Rollenware von beispielsweise bis zu 200 m Länge zur Baustelle geliefert werden kann.

Die Anschlusseinrichtung dient dabei der Kontaktierung der flexiblen Photovoltaik Module und der Stromeinspeisung z. B. in den Wechselrichter auf der Wechselstromseite eines photovoltaischen Systems. Die Photovoltaik Module sind auf einer Trägerfolie/Kunststoff-Trägerfolie in einen endlosen Folienverbund laminiert, der für den Transport zu einer Rolle aufgewickelt wird. Die Anschlusseinrichtungen sind flach in diesen Folienverbund integriert und können daher bei der Wicklung und beim Transport die Photovoltaik-Zellen (PV-Zellen) nicht mechanisch beschädigen.

Eine vorteilhafte Weiterbildung besteht darin, dass das Kontaktbauteil als separat ausgebildete (kann auch zusammenhängen), einrastbare Klemmeinrichtung, nämlich als so genannte platten- oder streifenförmige "Kontaktbrücke" ausgebildet ist, die mit komplementären Rasteinrichtungen am Leiterblech und/oder der Trägerplatte bzw. am Bauteilrahmen zusammenwirkt. Eine solche Ausbildung erlaubt eine sehr einfache Montage der Kontaktierung und erlaubt zusätzlich auch eine Mechanisierung der oder automatische Schließung des Kontaktes bei der Herstellung der Rollenware. Dabei kann das Kontaktbauteil durchaus als über eine Zunge oder biegsame Lasche mit der Trägerplatte zusammenhängende, einrastbare Klemmplatte oder Klemmschiene ausgebildet sein

Eine weitere vorteilhafte Ausbildung besteht darin, dass die Trägerplatte aus Kunststoff ausgebildet ist und die Leiterbleche und/oder die Anschlüsse zur Kontaktierung weiterführender elektrischer Leiter oder Kabel mit der Trägerplatte durch Formschluss verbunden sind, vorzugsweise durch Verformung vor Teilen der Trägerplatte heiß verstemmt sind. Dies erzeugt eine sichere Verbindung zwischen Leiterblechen und Trägerplatte und lässt sich in einer automatisierten Fertigung sehr einfach durch Heißverformung des Kunststoffs herstellen. Natürlich kann auch diese Verbindung als Rast- oder Klemmverbindung ausgeführt werden.

Eine weitere vorteilhafte Ausbildung besteht darin, dass die Trägerplatte und/oder die Leiterbleche mit Halterungen oder Ausnehmungen für elektrische/elektronische Bauteile versehen ist. Dies können Mess- oder Signaleinrichtungen für Spannung oder Strom sein, oder, wie in einer weiteren vorteilhaften Ausbildung vorgesehen, eine in einer Ausnehmung zwischen zwei Leiterblechen angeordnete und letztere elektrisch verbindende Diode aufweist. Eine solche Diode verhindert beispielsweise das Auftreten von Überschlag-Spannungen.

Eine weitere vorteilhafte Ausbildung besteht darin, dass das Kontaktbauteil die Anschlüsse zur Kontaktierung mindestens eines weiterführenden elektrischen Leiters oder Kabels elektrisch und mechanisch mit dem Leiterblech verbindet. Damit sind keine separaten Maßnahmen zum Anschluss der unterschiedlichen Leiter bzw. Leiterfahnen erforderlich, sondern es können mit dem Anbringen eines Bauteil und somit nur einer Montagehandlung alle Anschlüsse geschaltet werden.

Eine diesbezüglich weitere vorteilhafte Ausbildung besteht darin, dass das Kontaktbauteil die Länge oder die Fläche der Trägerplatte übergreift, beispielsweise als Rahmengitter ausgebildet ist, welches mit der später aufzubringenden Kunststoffmasse zur Verkapselung ausgefüllt wird, und alle dortigen Bauteile mit dem Kontaktbauteil am Träger befestigt sind. Somit wären etwa Leiterbleche, Anschlussbereiche, Anschlussfahnen oder Anschlusskontakte und ggf. elektrische/elektronische Bauteile mit einem Klemm- oder Einrastvorgang befestigt.

Eine weitere vorteilhafte Ausbildung besteht darin, dass die Einkapselung aus elektrisch isolierendem Kunststoffmaterial aus einem Silikonelastomer besteht, insbesondere aus einem Silikonelastomer oder Silikonkautschuk in Schaumform.

Zur erfindungsgemäßen Einkapselung wurde eine auf Silikonkautschuk basierende Kautschukmischung A mit der in Tabelle 1 dargestellten erfindungsgemäßen Zusammensetzung hergestellt. In der Tabelle sind die möglichen Mengenbereiche für ein erfindungsgemäßes Material auf der Basis von Silikonkautschuk angegeben. Die Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen. Als Vergleich ist in der Tabelle 1 eine Vergleichsmischung / Isoliermischung aufgeführt, wie sie z.B. durch die WO2011/154188 A1 offenbart ist. Das Material für die Einkapselung zeigt im Gegensatz zu der Vergleichsmischung eine hervorragende Anbindung, auch wenn bei Temperaturen von weniger als 130 °C vulkanisiert wurde.

**Tabelle 1**

| Mischungsbestandteile | Mischung A Mengen [phr] & Vorgaben | Mögliche Mengenbereiche [phr] für Mischung | Vergleichsmischung 2 |
|---|---|---|---|
| Silikonkautschuk ^{a} | 100 | 100 | 100 |
| Hitzestabilisatoren | 0,5 | 0 - 6 | 1,95 |
| Haftungskatalysator ^{b} | 0,5 | 0 - 4 | - |
| Verarbeitungshilfsmittel | 0,3 | 0 - 3 | 0,3 |
| Peroxidvernetzer | - | 0 - 4 | 1,05 |
| Edelmetallkatalysator-Batch ^{c} | 1,5 | 0,1 - 3,0 | - |
| Silikonöl | 9,30 | 1,5 - 20 | 9,30 |
| Inhibitoren ^{d} | 0,5 | 0-3 | - |
| vorexpandierte Mikrokugeln | 5,58 | 2 - 100 | 5,58 |
| expandierbare Mikrokugeln | - | - | 1,5 |
| Additive (z.B. Vernetzer ^{e}) | 2,5 | 0- 12 | - |
| Geruch | geruchslos | | deutlich nach Peroxid-Spaltprodukten |
| Start Vernetzung bei Temperatur von | > 60-80 °C | | > 130 °C |
| Haftung an Folienkomponenten | gut | | keine |

| | | | |
|---|---|---|---|
| ^{a} Elastosil® 401/40 S, Elastosil® 420/50 S ^{b} Wacker® Katalysator TC 44 ^{c} Elastosil® AUX Batch PT 1, Xiameter® RBM-9202 CATALYST ^{d} Elastosil® Inhibitor PT 88, Xiameter® RBM-9200 Inhibitor ^{e} Elastosil® Vernetzer W, Xiameter® RBM-9201 Crosslinker | | | |

Das Silikon-Material als Silikonkautschuk in Schaumform evtl. auch als kompaktes Material kann z.B. in Ausnehmungen eingespritzt oder auf Strukturen aufgespritzt werden. Es kann auch als Plattenmaterial, ggf. auch beidseitig, aufgelegt und angepresst werden. Die Aushärtung erfolgt durch Vulkanisation, bevorzugt bei Temperaturen zwischen 80 und 160 °C, wobei die Energie bevorzugt mit einem Wärmestrahler (IR= InfrarotStrahler) eingebracht wird.

Besonders vorteilhaft lässt sich die erfindungsgemäße Anschlusseinrichtung verwenden zur Verbindung elektrisch leitender Anschlussfahnen von auf einer Kunststoff-Trägerfolie angeordneten photovoltaischen Elementen miteinander oder mit weiterführenden elektrischen Leitern oder Kabeln, wenn die Anschlusseinrichtung in einer Ausnehmung der Trägerfolie angeordnet und mit letzterer durch Einkapselung aus isolierendem Kunststoffmaterial verbunden ist.

Die beschriebene Vorrichtung ist damit in die Dicke des Folienlaminats integriert und gemeinsam mit dem Laminat aufrollbar, transportfähig, flexibel, nicht scharfkantig, je nach Trägermaterial bzw. Trägerfolie schwimmfähig und durch die Verwendung des Silikon-Elastomers in Schaumform trittfest und komprimierbar. Bei einer solchen Verwendung der erfindungsgemäßen Anschlusseinrichtungen ist die Bauhöhe der Anschlusseinrichtung maximal doppelt so groß ist wie die Summe der Dicken von Kunststoff-Trägerfolie und photovoltaischen Elementen.

Besonders vorteilhaft lässt sich die erfindungsgemäße Anschlusseinrichtung verwenden zur Kontaktierung elektrisch leitender Anschlussfahnen photovoltaischer Elemente auf einer Kunststoff-Trägerfolie zur oder auf einer Abdeckung einer Wasseroberfläche oder eines Trinkwasserresevoirs. Hier macht es sich besonders positiv bemerkbar dass eine Verlegung "von der Rolle" erfolgen kann und vorgefertigte und miteinander oder mit dem Anschluss zum Wechselrichter bereits elektrisch verbundene/photovoltaische Elemente auf bahnförmigen Trägermaterial direkt ausgelegt werden können. Durch die herstellerseitig vorgefertigte Verbindung mit den erfindungsgemäßen Anschlusseinrichtungen entfällt die zeitaufwändige und teurer Einzelauflage und die manuelle Verbindung der einzelnen Anschlussfahnen der verlegten photovoltaischen Elemente.

Die erfindungsgemäße Anschlusseinrichtung zur Kontaktierung von elektrisch leitenden Anschlussfahnen oder Anschlusskontakten flächig ausgebildeter elektrisch leitender Elemente kann in entsprechender Anpassung natürlich für beliebige, insbesondere flexible elektrisch leitende Elemente genutzt werden, beispielsweise auch zur Kontaktierung von flächigen Sitzheizungen im Kraftfahrzeug.

Anhand eines Ausführungsbeispiels soll die Erfindung näher erläutert werden. Es zeigen
- Fig. 1: eine erfindungsgemäße Anschlusseinrichtung in einer "Explosionszeichnung" eine
- Fig. 2: die in Fig. 1 dargestellte Anschlusseinrichtung nach dem Zusammenbau aller Bauteile
- Fig. 3: eine weitere Anschlusseinrichtung die nicht Teil der Erfindung ist
- Fig. 4: eine wiederum andere Anschlusseinrichtung die nicht Teil der Erfindung ist
- Fig. 5: eine Skizze zu einer erfindungsgemäßen Verwendung der Anschlusseinrichtung

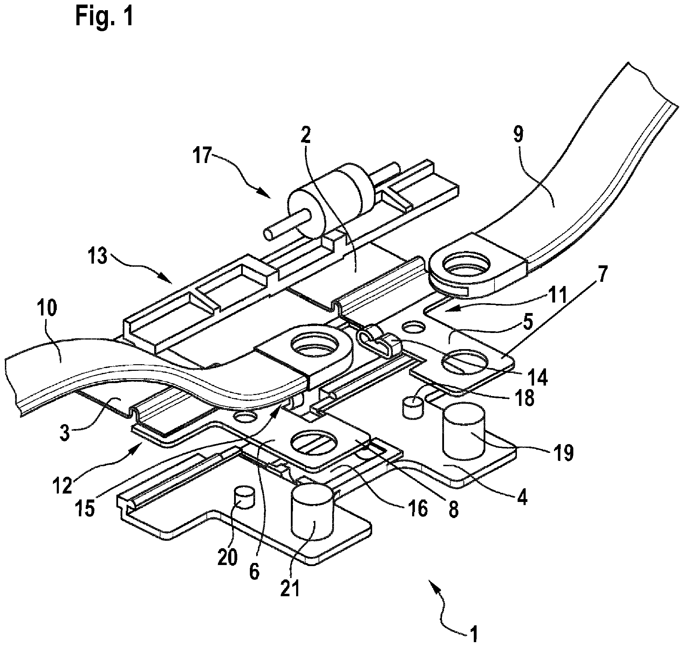

Die Fig. 1 zeigt in einer "Explosionszeichnung" eine Anschlusseinrichtung 1 zur elektrischen Kontaktierung von elektrisch leitenden Anschlussfahnen 2 und 3 von flächigen, hier nicht näher dargestellter Photovoltaik-Elementen. Die Anschlusseinrichtung 1 weist eine aus nichtleitendem Material bestehende flache Trägerplatte 4 auf, hier ausgebildet als rechteckiger, flacher Bauteilrahmen, sowie zwei mit der Trägerplatte 4 später, d.h. im Betriebszustand verbundene Leiterbleche 5 und 6.

Die Leiterbleche 5, 6 weisen im Betriebszustand Anschlüsse 7, 8 zur Kontaktierung mindestens eines weiterführenden elektrischen Leiters oder Kabels 9, 10 auf, hier ausgebildet als mit dem Leiterblech im Betriebszustand anliegend verbundenen als Ringschuhe ausgebildeten Anschlüsse für weiterführende Leiter 9 und 10. Die Anschlüsse verbinden über die Kabel 9, 10 die Photovoltaik-Elemente mit einem hier nicht näher dargestellten Wechselrichter auf der Wechselstromseite eines photovoltaischen Systems.

An den Leiterblechen 5 und 6 ist jeweils auch ein Anschlussbereich 11, 12 zur Kontaktierung der zugehörigen Anschlussfahnen 2, 3 vorgesehen.

Die Anschlusseinrichtung 1 weist außerdem ein Kontaktbauteil 13 aus nichtleitendem Material, nämlich ebenfalls aus Kunststoff auf, welches die Anschlussfahnen 2, 3 oder elektrisch und mechanisch mit dem Leiterblech verbindet. Das Kontaktbauteil 13 ist hier als separate, einrastbare Klemmbrücke ausgebildet, die mit hier nicht näher dargestellten komplementären Rasteinrichtungen am den Leiterblechen 5, 6 und an der Trägerplatte 4 im Betriebszustand / im zusammengebauten Zustand zusammenwirkt.

Die Trägerplatte 4 ist mit Halterungen 14, 15 und einer Ausnehmung 16 für elektrische/elektronische Bauteile versehen, hier zur Aufnahme und Halterung einer die beiden Leiterblechen elektrisch verbindende Diode 17.

Die Trägerplatte 4 ist hier aus thermoplastischem Kunststoff ausgebildet und wird über die später verformten Stollen 18, 19, 20, 21 mit den Leiterblechen 5, 6 und/ den als Ringschuhe ausgebildeten Anschlüssen 7, 8 durch Verstemmen heißverformt und fest verbunden.

Letztendlich ist die Anschlusseinrichtung in ihrem Einsatz- und Betriebszustand insgesamt in einem hier nicht näher dargestellten elektrisch isolierenden Kunststoffmaterial eingekapselt, von dem alle Bauteile umgeben sind und welches damit die Anschlusseinrichtung beispielsweise mit einer Trägerfolie verbinden kann und eine Zugentlastung und einen sicheren Witterungsschutz darstellt.

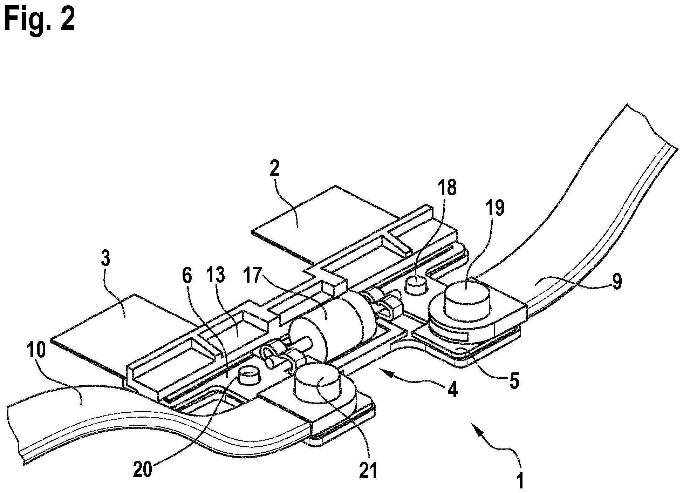

Fig. 2 zeigt die in Fig. 1 dargestellte Anschlusseinrichtung 1 nach dem Zusammenbau aller Bauteile, jedoch noch vor der Heißverformung/Verstemmung der Stollen 18-21 und ohne die Kapselung durch das isolierende Kunststoffmaterial.

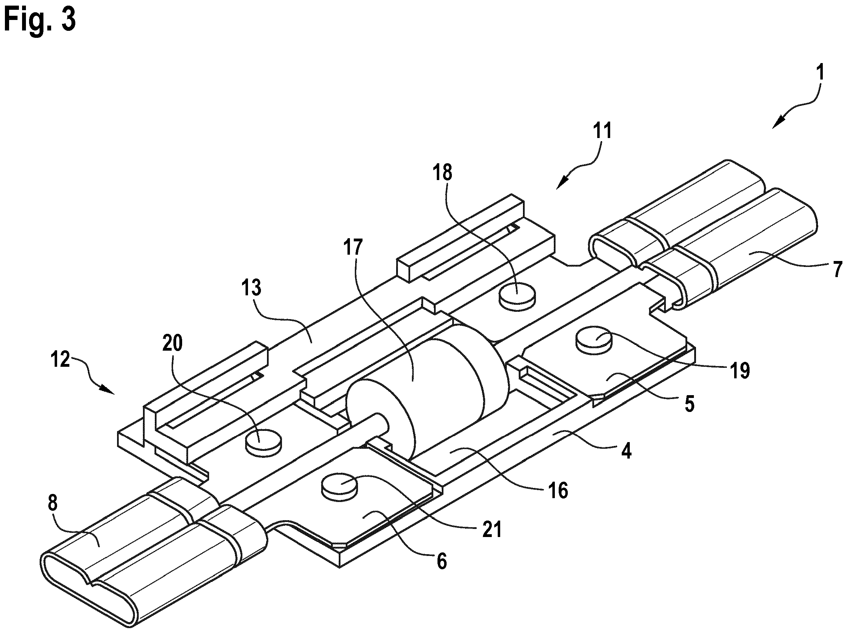

Fig. 3 zeigt eine weitere Anschlusseinrichtung 1 die nicht Teil der Erfindung ist bei der im Gegensatz zu den zu der Ausführung, wie sie in Figuren 1 und 2 dargestellt ist, einerseits die Leiterbleche 5, 6 anders ausgeformt/ausgestanzt sind als in Fig. 1 gezeigt, andererseits die Anschlüsse 7 und 8 zur Kontaktierung an den Wechselrichter als Kabelklemmen zum Einpressen eines Kabels ausgebildet und direkt als Blechteile mit den Leiterblechen 5 und 6 aus einem Stück gestanzt sind.

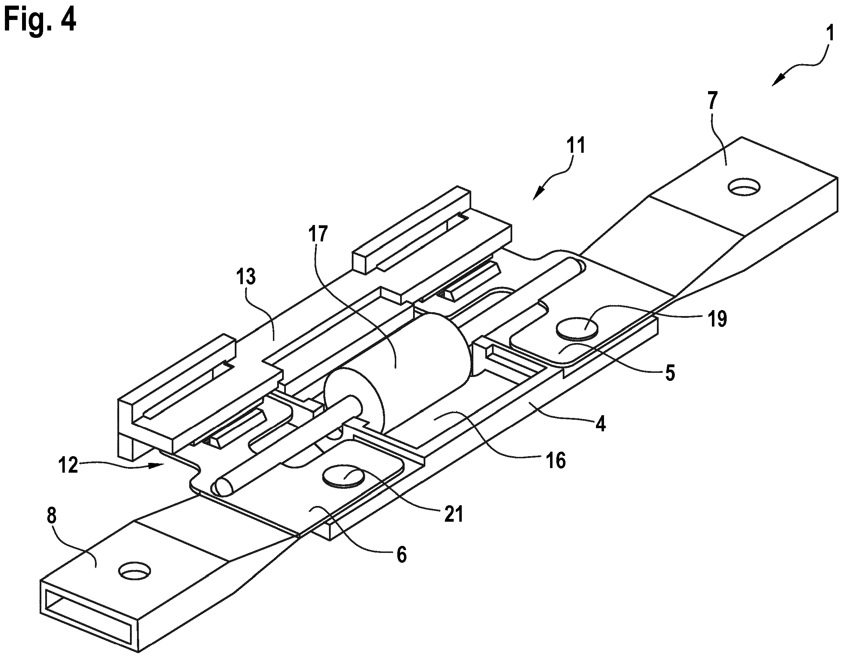

Fig. 4 zeigt eine ähnliche Anschlusseinrichtung 1 wie die, die in der Fig. 3 dargestellt ist, die auch nicht Teil der Erfindung ist. Bei dieser Ausführung sind ebenfalls die Anschlüsse 7 und 8 zusammen mit den Leiterblechen 5 und 6 aus einem Stück gestanzt und teilweise doppelseitig zusammengelegt. Die Anschlüsse 7 und 8 sind jeweils als Kabeleinschub ausgebildet, in denen ein Kabel eingebracht und über Bohrungen mit dem Anschluss verbunden werden kann.

Natürlich werden auch die Fig. 3 und 4 gezeigten Ausführungen nach Zusammenbau mit einer Kunststoffmasse gekapselt und umschlossen.

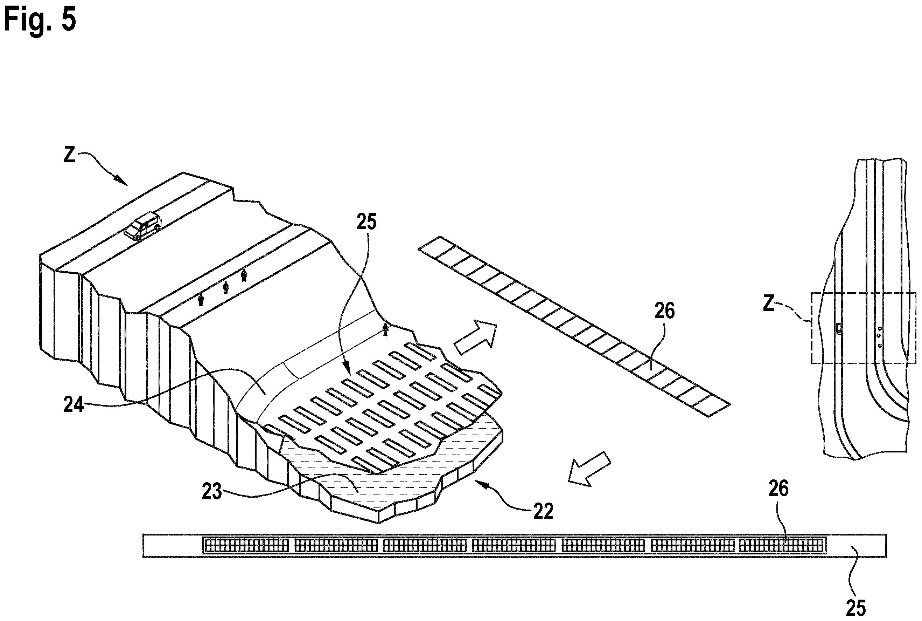

Fig. 5 zeigt eine Skizze zur erfindungsgemäßen Verwendung der Anschlusseinrichtung zur Kontaktierung elektrisch leitender Anschlussfahnen photovoltaischer Elemente auf einer Kunststoff-Trägerfolie zur oder auf einer Abdeckung einer Wasseroberfläche oder eines Trinkwasserreservoirs 22. Dabei ist das Trinkwasservolumen 23 abgedeckt von einer Kunststoff-Trägerfolie 24. Auf dieser Trägerfolie 24 sind nebeneinander und hintereinander lange Bahnen 25 von ca. 50 Metern Länge aus einem Kunststoff-Trägermaterial aufgelegt, welche ihrerseits wiederum mit elektrisch verbundenen photovoltaischen Elementen 26 in erheblicher Anzahl bestückt sind. Eine Verlegung der Bahnen 25 kann so "von der Rolle" erfolgen kann wobei die vorgefertigte und miteinander oder mit dem Anschluss zum Wechselrichter bereits elektrisch verbundene/photovoltaische Elemente auf dem bahnförmigen Trägermaterial direkt ausgelegt werden können. Gerade in diesen Anwendungsfällen, also bei üblicherweise in sehr heißen Gebieten vorhandenen Trinkwasserreservoirs, ist eine solche von der Rolle erfolgenden Verlegung von photovoltaischen Elementen überaus wichtig, um möglichst schnell und präzise große Flächen belegen zu können, ohne die Trägerfolien selbst zu schädigen oder zu lange dort zu verweilen.

### Bezugszeichenliste

### (Teil der Beschreibung)

- 1: Anschlusseinrichtung
- 2: Anschlussfahne
- 3: Anschlussfahne
- 4: Trägerplatte
- 5: Leiterblech
- 6: Leiterblech
- 7: Anschluss für weiterführenden Leiter
- 8: Anschluss für weiterführenden Leiter
- 9: weiterführender Leiter
- 10: weiterführender Leiter
- 11: Anschlussbereich für Anschlussfahne
- 12: Anschlussbereich für Anschlussfahne
- 13: Kontaktbauteil, Klemmbrücke
- 14: Halterung für elektrische/elektronische Bauteile
- 15: Halterung für elektrische/elektronische Bauteile
- 16: Ausnehmung für elektrische/elektronische Bauteile
- 17: Diode
- 18: Stollen
- 19: Stollen
- 20: Stollen
- 21: Stollen
- 22: Trinkwasserreservoir
- 23: Trinkwasservolumen
- 24: Kunststoff-Trägerfolie
- 25: Bahn aus Trägermaterial mit Photovoltaik-Elementen
- 26: Photovoltaisches Element

## Patentansprüche

1. Anschlusseinrichtung (1) zur elektrischen Kontaktierung von elektrisch leitenden Anschlussfahnen (2, 3) oder Anschlusskontakten flächig ausgebildeter elektrisch leitender Elemente, insbesondere zur Kontaktierung von flächigen Photovoltaik-Elementen (26), welche folgende Bauteile aufweist
a) eine aus nichtleitendem Material bestehende flache Trägerplatte (4), vorzugsweise ausgebildet als rechteckiger, flacher Bauteilrahmen,
b) mindestens ein mit der Trägerplatte (4) verbundenes Leiterblech (5, 6), wobei
- das Leiterblech Anschlüsse (7, 8) zur Kontaktierung mindestens eines weiterführenden elektrischen Leiters oder Kabels (9, 10) aufweist, und wobei
- am Leiterblech mindestens ein Anschlussbereich (11, 12) zur Kontaktierung mindestens einer der Anschlussfahnen (2, 3) oder Anschlusskontakte vorgesehen ist,
wobei die Anschlusseinrichtung (1) außerdem ein Kontaktbauteil (13) aus nichtleitendem Material aufweist, welches die Anschlussfahnen (2, 3) oder Anschlusskontakte elektrisch und mechanisch mit dem Leiterblech (5, 6) verbindet, wobei die Trägerplatte (4) aus Kunststoff ausgebildet ist, **dadurch gekennzeichnet, dass** die Leiterbleche (5, 6) und die Anschlüsse (7, 8) zur Kontaktierung weiterführender elektrischer Leiter oder Kabel (9, 10) mit der Trägerplatte (4) durch Verformung von Teilen der Trägerplatte verbunden sind, wobei die Verformung durch Heißverstemmen erfolgt und wobei die Anschlusseinrichtung insgesamt in einem elektrisch isolierenden Kunststoffmaterial eingekapselt ist.

2. Anschlusseinrichtung nach Anspruch 1, bei der das Kontaktbauteil (13) als separat ausgebildete, einrastbare Klemmeinrichtung ausgebildet ist, die mit komplementären Rasteinrichtungen am Leiterblech (5, 6) und/oder an der Trägerplatte (4) bzw. am Bauteilrahmen zusammenwirkt.

3. Anschlusseinrichtung nach Anspruch 1 oder 2, bei der die Trägerplatte (4) und/oder die Leiterbleche (5, 6) mit Halterungen (14, 15) und/oder Ausnehmungen (16) für elektrische/elektronische Bauteile versehen sind.

4. Anschlusseinrichtung nach Anspruch 3, bei der die Trägerplatte (4) eine in einer Ausnehmung zwischen zwei Leiterblechen (5, 6) angeordnete und letztere elektrisch verbindende Diode (17) aufweist.

5. Anschlusseinrichtung nach einem der Ansprüche 1 bis 4, bei der das Kontaktbauteil (13) die Anschlüsse zur Kontaktierung mindestens eines weiterführenden elektrischen Leiters oder Kabels elektrisch und mechanisch mit dem Leiterblech verbindet.

6. Anschlusseinrichtung nach einem der Ansprüche 1 bis 5, bei der das Kontaktbauteil (13) die Länge oder die Fläche der Trägerplatte übergreift und die dortigen Bauteile mit dem Kontaktbauteil an der Trägerplatte befestigt sind.

7. Anschlusseinrichtung nach einem der Ansprüche 1 bis 6, bei der die Einkapselung aus elektrisch isolierendem Kunststoffmaterial aus einem Silikonelastomer besteht, insbesondere aus einem Silikonelastomer in Schaumform.

8. Verwendung einer Anschlusseinrichtung nach einem der Ansprüche 1 bis 7zur Kontaktierung elektrisch leitender Anschlussfahnen photovoltaischer Elemente auf einer Kunststoff-Trägerfolie (24) zur Abdeckung einer Wasseroberfläche oder eines Wasser- oder Trinkwasserreservoirs (22).

## Claims

1. Connection device (1) for electrically contact-connecting electrically conductive connection lugs (2, 3) or connection contacts of electrically conductive elements of planar design, in particular for contact-connecting planar photovoltaic elements (26), which connection device has the following components:
a) a flat carrier plate (4) consisting of non-conductive material and preferably in the form of a rectangular, flat component frame,
b) at least one conductor plate (5, 6) connected to the carrier plate (4), wherein
- the conductor plate has connections (7, 8) for contact-connecting at least one continuing electric conductor or cable (9, 10), and wherein
- at least one connection region (11, 12) for contact-connecting at least one of the connection lugs (2, 3) or connection contacts is provided on the conductor plate,
wherein the connection device (1) furthermore has a contact component (13) made of non-conductive material which electrically and mechanically connects the connection lugs (2, 3) or connection contacts to the conductor plate (5, 6), wherein the carrier plate (4) is formed from plastic, **characterized in that** the conductor plates (5, 6) and the connections (7, 8) for contact-connecting continuing electric conductors or cables (9, 10) are connected to the carrier plate (4) by deforming parts of the carrier plate, wherein the deforming is realized by way of hot caulking, and wherein the connection device is entirely encapsulated in an electrically insulating plastic material.

2. Connection device according to Claim 1, in which the contact component (13) is in the form of a separate clamping device which can be latched in and which interacts with complementary latching devices on the conductor plate (5, 6) and/or on the carrier plate (4) or on the component frame.

3. Connection device according to Claim 1 or 2, in which the carrier plate (4) and/or the conductor plates (5, 6) is/are provided with mounts (14, 15) and/or recesses (16) for electric/electronic components.

4. Connection device according to Claim 3, in which the carrier plate (4) has a diode (17) which is arranged in a recess between two conductor plates (5, 6) and electrically connects said two conductor plates.

5. Connection device according to one of Claims 1 to 4, in which the contact component (13) electrically and mechanically connects the connections for contact-connecting at least one continuing electric conductor or cable to the conductor plate.

6. Connection device according to one of Claims 1 to 5, in which the contact component (13) engages over the length or the surface area of the carrier plate and the components there are fastened to the contact component on the carrier plate.

7. Connection device according to one of Claims 1 to 6, in which the encapsulation of electrically insulating plastic material consists of a silicone elastomer, in particular of a silicone elastomer in foam form.

8. Use of a connection device according to one of Claims 1 to 7 for contact-connecting electrically conductive connection lugs of photovoltaic elements on a plastic carrier film (24) for covering a surface of water or a service reservoir or drinking water reservoir (22).

## Revendications

1. Dispositif de connexion (1) destiné à établir un contact électrique avec des cosses de connexion électriquement conductrices (2, 3) ou des contacts de connexion électriquement conducteurs d'éléments électriquement conducteurs de forme sensiblement bidimensionnelle, destinés en particulier à venir en contact avec des éléments photovoltaïques (26) sensiblement bidimensionnels, lequel dispositif de connexion comporte les composants suivants
a) une plaque de support plate (4) en matériau non conducteur, de préférence conçue comme un cadre de composant plat rectangulaire,
b) au moins une plaque conductrice (5, 6) reliée à la plaque de support (4),
- la plaque conductrice comportant des connexions (7, 8) destinées à venir en contact avec au moins un conducteur ou câble électrique supplémentaire (9, 10), et
- au moins une zone de connexion (11, 12) étant prévue sur la plaque conductrice pour venir en contact avec l'une au moins des cosses de connexion (2, 3) ou l'un au moins des contacts de connexion,
le dispositif de connexion (1) comportant également un composant de contact (13) en matériau non conducteur qui relie électriquement et mécaniquement les cosses de connexion (2, 3) ou les contacts de connexion à la plaque conductrice (5, 6), la plaque de support (4) étant en matière synthétique, **caractérisé en ce que** les plaques conductrices (5, 6) et les connexions (7, 8) destinées venir en contact avec des conducteurs ou câbles électriques supplémentaires (9, 10) sont reliées à la plaque de support (4) par déformation de parties de la plaque de support, la déformation étant effectuée par matage à chaud et le dispositif de connexion étant encapsulé dans son ensemble dans une matière synthétique électriquement isolante.

2. Dispositif de connexion selon la revendication 1, dans lequel le composant de contact (13) est conçu comme un dispositif de serrage encliquetable conçu séparément qui coopère avec des dispositifs d'encliquetage complémentaires sur la plaque conductrice (5, 6) et/ou sur la plaque de support (4) ou sur le cadre du composant.

3. Dispositif de connexion selon la revendication 1 ou 2, dans lequel la plaque de support (4) et/ou les plaques conductrices (5, 6) sont pourvues de supports (14, 15) et/ou d'évidements (16) destinés à des composants électriques/électroniques.

4. Dispositif de connexion selon la revendication 3, dans lequel la plaque de support (4) comporte une diode (17) qui est disposée dans un évidement ménagé entre deux plaques conductrices (5, 6) et qui relie électriquement celles-ci.

5. Dispositif de connexion selon l'une des revendications 1 à 4, dans lequel l'élément de contact (13) relie électriquement et mécaniquement les connexions, destinées à venir en contact avec au moins un conducteur ou câble électrique supplémentaire, à la plaque conductrice.

6. Dispositif de connexion selon l'une des revendications 1 à 5, dans lequel le composant de contact (13) couvre la longueur ou la surface de la plaque de support et les composants qui s'y trouvent sont fixés au composant de contact sur la plaque de support.

7. Dispositif de connexion selon l'une des revendications 1 à 6, dans lequel l'encapsulation en matière synthétique électriquement isolante est en élastomère silicone, notamment en élastomère silicone sous forme de mousse.

8. Utilisation d'un dispositif de connexion selon l'une des revendications 1 à 7, destiné à venir en contact avec des cosses de connexion électriquement conductrices d'éléments photovoltaïques sur un film de support (24) en matière synthétique, pour recouvrir une surface d'eau ou un réservoir d'eau ou d'eau potable (22) .
